Europäisches Patentamt

European Patent Office

Office européen des brevets

(19)

(11) Veröffentlichungsnummer: **0 253 209 B1**

# (12) EUROPÄISCHE PATENTSCHRIFT

(45) Veröffentlichungstag der Patentschrift:
30.01.91 Patentblatt 91/05

(51) Int. Cl.$^5$: **B60P 1/44,** B60Q 1/26

(21) Anmeldenummer: **87109489.2**

(22) Anmeldetag: **01.07.87**

(54) Ladebordwand für Kraftfahrzeuge.

(30) Priorität: **10.07.86 DE 3623248**

(43) Veröffentlichungstag der Anmeldung:
**20.01.88 Patentblatt 88/03**

(45) Bekanntmachung des Hinweises auf die
Patenterteilung:
**30.01.91 Patentblatt 91/05**

(84) Benannte Vertragsstaaten:
**AT BE CH ES FR GB IT LI LU NL SE**

(56) Entgegenhaltungen:
**EP-A- 0 017 620
WO-A-85/01706
US-A- 3 196 265
US-A- 3 331 957
US-A- 3 582 640**

(73) Patentinhaber: **Peter Maier Leichtbau GmbH
Gottlieb-Daimler-Strasse 7
D-7700 Singen/Hohentwiel (DE)**

(72) Erfinder: **Maier, Peter
Oberstrasse 28
D-7703 Rielasingen-Worblingen (DE)**
Erfinder: **Brodbeck, Klaus Peter, Dipl.-Ing.
Rheinfelderstrasse 5
D-7700 Singen (DE)**

(74) Vertreter: **Hoeger, Stellrecht & Partner
Uhlandstrasse 14 c
D-7000 Stuttgart 1 (DE)**

## Beschreibung

Die Erfindung betrifft eine Ladebordwand für Kraftfahrzeuge mit einer um eine Schwenkachse schwenkbare Plattform und kraftbetätigten Mitteln zum Heben und Senken der Plattform, wobei die Plattform wenigstens teilweise als Hohlkörper ausgebildet und durch innere Verstärkungsrippen versteift ist.

An den Plattformen von Ladebordwänden müssen Warnlampen vorgesehen werden, um die ausgeklappte Plattform bei schlechten Sichtverhältnissen kenntlich zu machen, so daß Unfälle verhütet werden können. Insbesondere müssen dabei auch die Seitenflächen der Plattform durch Lichtquellen sichtbar gemacht werden. Dabei entsteht das Problem, daß solche Warnleuchten die Arbeitsfläche der Plattform beeinträchtigen und das Hantieren mit der Plattform stören können.

Es ist dementsprechend Aufgabe der Erfindung, eine gattungsgemäße Ladebordwand, insbesondere seitlich so zu beleuchten, daß die verwendeten Lichtquellen beim Hantieren mit der Plattform in keiner Weise als Störung empfunden werden.

Die Aufgabe wird erfindungsgemäß dadurch gelöst, daß an wenigstens einer senkrecht zur Schwenkachse verlaufenden Seitenfläche der hohlen Plattform eine transparente Abdeckung und hinter dieser Abdeckung im Innern der Plattform eine Lichtquelle angeordnet sind.

Hierdurch ist die Lichtquelle vollkommen innerhalb der Umrißkonturen der Plattformen angeordnet und beeinträchtigt das Hantieren mit der Plattform nicht.

Die nachstehende Beschreibung bevorzugter Ausführungsformen der Erfindung dient im Zusammenhang mit beiliegender Zeichnung der weiteren Erläuterung. Es zeigen :

Fig. 1 in schematischer Seitenansicht eine Ladebordwand für Kraftfahrzeuge mit schwenkbarer, anheb- und absenkbarer Plattform ;

Fig. 2 eine schaubildliche, abgebrochene Darstellung der Plattform ;

Fig. 3 eine erste Ausführungsform einer Plattformbeleuchtung ;

Fig. 4 eine andere Ausführungsform der Plattformbeleuchtung und

Fig. 5 und 6 eine weiterhin abgewandelte Ausführungsform.

Am Heck 1 eines (nicht dargestellten) Kraftfahrzeuges ist in an sich bekannter Weise ein Holm 2 um eine horizonale Achse 3 schwenkbar gelagert. Am vorderen, freien Ende des Holmes 2 ist um eine Achse 4 schwenkbar eine Ladeplattform 5 angeordnet. Ein erstes Kolben-Zylinder-Aggregat 6 ist an horizontal verlaufenden Achsen 7 bzw. 8 einerseits mit dem Heck 1 des Kraftfahrzeuges und andererseits mit der Plattform 5 gelenkig verbunden. Ein weiteres Kolben-Zylinderaggregat 9 ist in entsprechender Weise an horizontalen Achsen 11 bzw. 12 gelenkig zwischen dem Heck 1 und dem Holm 2 angeordnet. In der Zeichnung sind jeweils nur ein Holm 2, sowie ein Kolben-Zylinder-Aggregat 6 bzw. 9 dargestellt. In Wirklichkeit sind an beiden Seiten der Plattform jeweils eine solcher Anordnungen vorgesehen.

Bei Betätigung des Kolben-Zylinder-Aggregats 6 kann die Plattform 5 aus der dargestellten Horizontallage in eine Vertikallage verschwenkt werden. Bei Betätigung des Kolben-Zylinder-Aggregats 9 kann die Plattform 5 angehoben und abgesenkt werden, wobei der Holm 2 und das Aggregat 6 als Parallelführung dienen.

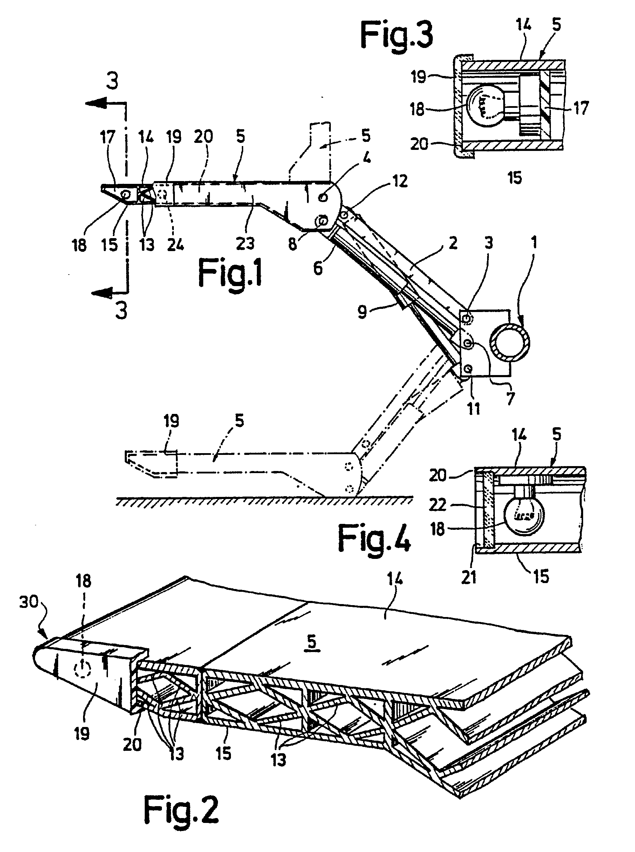

Der Aufbau der Plattform 5 ist in Fig. 2 dargestellt. Die Plattform ist zumindest teilweise als Hohlkörper ausgebildet und durch innere Verstärkungsrippen 13, die quer zwischen einer Oberseite 14 und einer Unterseite 15 der Plattform 5 verlaufen, versteift. Vorzugsweise wird die Plattformstruktur gemäß Fig. 2 aus Leichtmetall-, insbesondere Aluminiumguß gefertigt, wobei einzelne Platt formabschnitte jeweils für sich gegossen und anschliessend miteinander verschweißt werden können.

Die hohle Ausbildung der Plattform 5 ermöglicht es, in ihrem Inneren Lichtquellen anzuordnen, die seitlich abstrahlen und somit in dieser Richtung als Warnleuchten dienen, ohne daß dabei die Arbeitsfläche der Plattform durch die in deren Innerem vorgesehenen Lichtquellen behindert wird.

Die Fig. 3 zeigt, wie im Hohlraum zwischen der Oberseite 14 und der Unterseite 15 der Plattform 5 an einer senkrecht eingepaßten Wand 17 eine elektrische Glühbirne 18 als Lichtquelle angeordnet werden kann. Die Glühbirne 18 liegt unmittelbar an einer senkrecht zu den oben erwähnten Schwenkachsen 3 oder 4 verlaufenden Seitenfläche 20 der Plattform 5 (vgl. auch Fig. 1). Diese Seitenfläche ist gemäß Fig. 3 durch eine transparente Abdeckung 19 überfangen, hinter welcher die Glühbirne 18 liegt. Die Abdeckung 19 hat in diesem Falle die Form einer Kappe, welche die Ober- und Unterseiten 14, 15 der Plattform teilweise überragt.

Es ist offensichtlich, daß eine derart angeordnete Warnleuchte die Seitenfläche der Plattform deutlich hervortreten läßt, ohne dabei die Arbeitsfläche und die Handhabung der Plattform in irgendeiner Weise zu beeinträchtigen.

Bei der Ausführungsform gemäß Fig. 4 ist eine Lichtquelle in Form der Glühbirne 18 an der Oberseite 14 der Platt form 5 in der Nähe von deren Seitenfläche 20 befestigt. Die Seitenfläche 20 weist eine Aussparung 21 auf, in welcher eine transparente Abdeckung 22 in Form einer Platte eingesetzt und befestigt ist. Auf diese Weise sind gegenüber der Ausführungsform nach Fig. 3 die über Ober- und Unterseite vorstehenden Ränder der Kappe vermieden und die seitlichen Ränder von Ober- und Unterseite 14, 15 der Plattform stehen etwas über die Abdeckung 22 vor.

Die Abdeckungen 19, 22 werden vorzugsweise aus transparentem Kunststoff hergestellt, der auch eine Einfärbung, beispielsweise gelb oder orange, besitzen kann. Die Abdeckung kann mit der Plattform verklebt, verschraubt oder in anderer Weise verbunden sein.

Glühbirnen 18 mit Abdeckungen 19, 22 werden vorzugsweise an beiden Seitenflächen 20 der Plattform 5 vorgesehen.

Die Abdeckungen 19, 20 brauchen nicht die gesamten Seitenflächen 20 der Plattform 5 zu bedecken, sondern nur denjenigen Bereich, in welchem die Glühbirnen 18 angeordnet sind. Dies ist bei der Ausführungsform gemäß Fig. 1 und 2 der Bereich in der Nähe der hinteren Kante der Plattform 5. Wie aus Fig. 1 hervorgeht, ist lediglich der hintere Teil der Seitenfläche 20 durch die Abdeckfläche 19 überdeckt. An dem sich anschließenden Bereich der Seitenfläche 20 ist eine undurchsichtige Abdeckung 23 vorgesehen.

Es ist ohne weiteres möglich, anstelle nur einer Glühbirne 18 mehrere Glühbirnen entlang der Seitenflächen 20 der Plattform 5 vorzusehen und vor diesen transparente Abdeckungen 19, 22 anzuordnen. In Fig. 1 ist eine zweite Glühbirne 24 gestrichelt angedeutet, die ebenfalls hinter der Abdeckung 19 liegt.

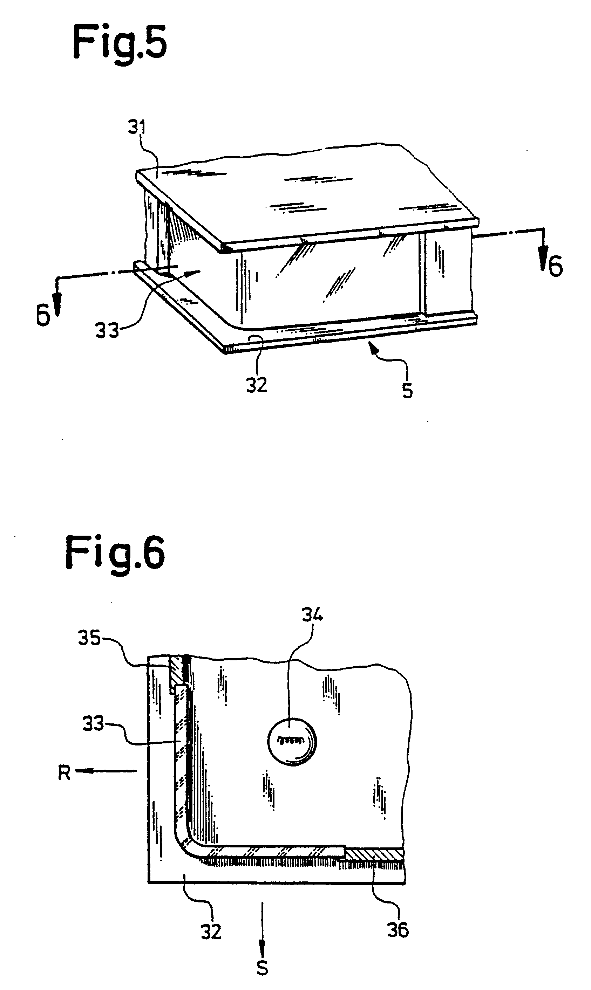

Die Figuren 5 und 6 zeigen eine weitere Ausführungsform der Erfindung. An einer freien, hinteren Ecke der Plattform 5, beispielsweise der Ecke 30 in Fig. 2, ist zwischen einer oberen Wand 31 und einer unteren Wand 32 der Plattform eine transparente Abdeckung 33 angeordnet, die sich zwischen den Wänden 31, 32 um die freie Ecke der Plattform 5 herum erstreckt. Hinter der Abdeckung 33 ist zwischen den Wänden 31, 32 eine Lichtquelle 34 angeordnet. Somit treten die Strahlen dieser Lichtquelle nicht nur seitlich (in Richtung des Pfeiles R) sondern auch rückwärts (in Richtung des Pfeiles S) aus, so daß die Plattform nach diesen beiden Richtungen hin beleuchtet und somit gesichert ist. Eine technische Realisierung der Ausführungsform gemäß Fig. 5 und 6 kann so erfolgen, daß in eine entsprechend ausgeschnittene, freie hintere Ecke der Plattform ein Kasten eingesetzt ist, welcher die Abdeckung 33 als Seitenwand enthält, die in diesem Falle von der oberen und unteren Wand des Kastens gehalten wird.

Bei der Ausführungsform nach Fig. 5 und 6 setzen sich die beiden Schenkel der Abdeckung 33 in lichtundurchlässige Wandteile 35 bzw. 36 der Plattform fort.

Die Erfindung ist nicht auf die in Fig. 1 dargestellte spezielle Ladeplattform und das mit ihr verbundene Parallelogrammsystem beschränkt. Die Plattform könnte auch liftartig über Seilzüge oder dgl. nach oben gezogen werden. Auch weitere, anders gestaltete Hub- und Schwenkanordnungen sind möglich. Die erfindungsgemäße Beleuchtungs- und Sicherheitseinrichtung kann an sämtlichen Heckklappen von Lastkraftwagen, Anhängern und sonstigen Fahrzeugen angebracht werden, soweit derartige Klappen die beschriebene Hohlform besitzen und die Aufnahme von Beleuchtungseinrichtungen und transparenten Abdeckungen gestatten.

## Ansprüche

1. Ladebordwand für Kraftfahrzeuge mit einer um eine Schwenkachse schwenkbaren Plattform und kraftbetätigten Mitteln zum Heben und Senken der Plattform, wobei die Plattform wenigstens teilweise als Hohlkörper ausgebildet und durch innere Verstärkungsrippen versteift ist, **dadurch gekennzeichnet**, daß an wenigstens einer senkrecht zur Schwenkachse (3, 4) verlaufenden Seitenfläche (20) der hohlen Plattform (5) eine transparente Abdeckung (19, 22) und hinter dieser Abdeckung im Inneren der Plattform eine Lichtquelle (18) angeordnet sind.

2. Ladebordwand nach Anspruch 1, dadurch gekennzeichnet, daß die Abdeckung (19) als Kappe auf die Seitenfläche (20) aufgesteckt ist und die Ober- und Unterseite (14, 15) der Plattform (5) teilweise überragt.

3. Ladebordwand nach Anspruch 1, dadurch gekennzeichnet, daß die Abdeckung (22) in eine Ausnehmung (21) an der Seitenfläche (20) eingesetzt ist und die Ober- und Unterseiten (14, 15) der Plattform (5) die Abdeckung überragen.

4. Ladebordwand nach Anspruch 1, 2 oder 3, dadurch gekennzeichnet, daß die transparente Abdeckung (19, 22) die Seitenfläche (20) der Plattform (5) nur zu einem Teil überdeckt und am restlichen Teil der Seitenfläche eine undurchsichtige Abdeckung (20) angeordnet ist.

5. Ladebordwand nach einem der Ansprüche 1 bis 4, dadurch gekennzeichnet, daß hinter der transparenten Abdeckung (19, 22) mehrere Lichtquellen (18, 24) angeordnet sind.

6. Ladebordwand nach einem der Ansprüche 1-5, dadurch gekennzeichnet, daß die transparente Abdeckung (19, 22) um eine freie Ecke der Plattform (5) herumgeführt und die Lichtquelle derart hinter der Abdeckung angeordnet ist, daß Lichtstrahlen gleichzeitig seitlich und rückwärts austreten.

## Claims

1. A loading tailboard for motor vehicles comprising a platform pivotable about a pivoting axis and power operated means for raising and lowering the platform, where the platform is constructed at least partially as a hollow body and is strengthened by internal reinforcing ribs, characterized in that a transparent cover (19, 22) is arranged on at least one side surface (20), extending at right angles to the pivoting axis (3, 4), of the hollow platform and a light source (18) is arranged behind this cover in the interior of the platform.

2. A loading tailboard according to claim 1, characterized in that the cover (19) is put on the side surface (20) as a cap and projects partially over the top and bottom sides (14, 15) of the platform (5).

3. A loading tailboard according to claim 1, characterized in that the cover (22) is inserted in a recess (21) in the side surface (20) and the top and bottom sides (14, 15) of the platform (5) project over the cover.

4. A loading tailboard according to claim 1, 2 or 3, characterized in that the transparent cover (19, 22) only partially covers the side surface (20) of the platform (5) and an opaque cover (20) is arranged on the remaining part of the side surface.

5. A loading tailboard according to any one of claims 1 to 4, characterized in that a plurality of light sources (18, 24) are arranged behind the transparent cover (19, 22).

6. A loading tailboard according to any one of claims 1 to 5, characterized in that the transparent cover (19, 22) extends round a free corner of the platform (5) and the light source is arranged behind the cover in such a way that the light rays emerge sideways and backwards simultaneously.

## Revendications

1. Hayon élévateur de chargement pour véhicules à moteur, comprenant une plate-forme pouvant pivoter autour d'un axe de pivotement et un moyen actionné par une force extérieure pour élever et abaisser la plate-forme, dans lequel la plate-forme est conformée au moins en partie comme un corps creux et elle est renforcée par des nervures intérieures de renforcement, caractérisé en ce que, sur au moins une surface latérale (20) s'étendant perpendiculairement à l'axe de pivotement (3, 4) de la plate-forme creuse (5),sont disposées une couverture transparente (19, 22) et derrière cette couverture, à l'intérieur de la plate-forme, une source de lumière (18).

2. Hayon élévateur de chargement selon la revendication 1, caractérisé en ce que la couverture (19) est placée, comme un chapeau, sur la surface latérale (20) et elle est partiellement en saillie par rapport à la face supérieure et à la face inférieure (14, 15) de la plate-forme (5).

3. Hayon élévateur de chargement selon la revendication 1, caractérisé en ce que la couverture (22) est introduite dans un évidement (21) de la surface latérale (20) et les faces supérieure et inférieure (14, 15) de la plate-forme (5) sont en saillie par rapport à cette couverture.

4. Hayon élévateur de chargement selon la revendication 1, 2 ou 3, caractérisé en ce que la couverture transparente (19,22) ne couvre qu'une partie de la surface latérale (20) de la plate-forme (5) et une couverture opaque (20) est placée sur le reste de la surface latérale.

5. Hayon élévateur de chargement selon l'une des revendications 1 à 4, caractérisé en ce que plusieurs sources de lumière (18, 24) sont disposées derrière la couverture transparente (19, 22).

6. Hayon élévateur de chargement selon l'une des revendications 1 à 5, caractérisé en ce que la couverture transparente (19, 22) contourne un angle libre de la plateforme (5) et la source de lumière est disposée derrière la couverture de telle façon que les rayons lumineux sortent en même temps sur le côté et sur l'arrière.

Fig.3

Fig.1

Fig.4

Fig.2

# Fig.5

# Fig.6